# DEMANDE DE BREVET EUROPEEN

(11) **EP 4 356 705 A1**
(43) Date de publication de la demande: **24.04.2024**
(21) Numéro de dépôt: 23203266.4
(22) Date de dépôt: 12.10.2023
(51) Int. Cl.: A01B 73/04, A01B 76/00, B60R 3/00, A01C 7/20

(54) **MACHINE AGRICOLE REPLIABLE AVEC UNE PARTIE ET UN COMPOSANT RELIES CINEMATIQUEMENT ENTRE EUX**

(30) Priorité: 17.10.2022 FR 2210668
(71) Demandeur: Kuhn SAS, 67700 Saverne (FR)
(72) Inventeur: KIRCH, Michel, 67260 KESKASTEL (FR); FRIANG, Thibaut, 57870 PLAINE-DE-WALSCH (FR)
(74) Mandataire: Hager, Esther Evelyne

(57) **Abrégé**

La présente invention concerne une machine agricole (1) repliable, laquelle comprend, d'une part, une partie fonctionnelle (2) montée de manière articulée et pouvant être déplacée alternativement entre une première position déployée et une seconde position repliée et, d'autre part, un composant (3) monté de manière articulée et pouvant être déplacé entre une première position opérationnelle et une seconde position non opérationnelle.

Machine agricole (1) caractérisée en ce que ledit composant (3) est relié cinématiquement, au moins en traction, par l'intermédiaire d'un lien mécanique flexible (4), à la partie fonctionnelle (2) considérée, de telle manière qu'un déplacement de ladite partie fonctionnelle (2) entre sa première position et sa seconde position entraine automatiquement un déplacement similaire dudit composant (3) entre ses première et seconde positions.

## Description

L'invention concerne le domaine général des machines agricoles, motorisées, tractées ou portées, et plus particulièrement celui des machines agricoles comprenant des parties ou des sections repliables.

Une telle machine agricole repliable comprend ainsi au moins une partie ou section fonctionnelle montée de manière articulée et pouvant être déplacée alternativement entre au moins une première position déployée (sur le côté, vers l'avant, vers l'arrière, vers le bas) et au moins une seconde position repliée.

Les positions déployées et repliées desdites parties ou sections sont définies par rapport au châssis de la machine, à une partie de ce châssis ou encore à un élément central de la machine (trémie, réservoir, corps principal, ...). La position déployée correspond normalement à une position d'utilisation ou de travail de la partie ou section considérée, et la position repliée à une position de non-utilisation, de transport ou de remisage, voire de manoeuvre sans travail.

En fonction du type de machine, la nature de la ou des partie(s) ou section(s) fonctionnelle(s) repliable(s) peut varier (branches latérales de semoir, de pulvérisateur, de faucheuse, de herse, etc...).

Une telle machine agricole repliable comprend aussi souvent des composants mécaniques ou accessoires qui peuvent également basculer entre une position ouverte/déployée/opérationnelle et une position fermée/repliée, tels que par exemple :
- escalier d'accès à une trémie
- plateforme avec/sans garde-corps
- passerelle de circulation.

Ces plateformes, passerelles et escaliers fournissent des possibilités d'accès et de circulation à l'opérateur, lui permettant entre autres d'effectuer différents réglages et opérations de maintenance sur la machine (au centre de celle-ci ou en hauteur) et aussi d'inspecter des endroits de la machine non visibles depuis le sol ou depuis le tracteur, tels que par exemple, pour des semoirs, les trémies ou encore les systèmes de dosage (généralement situés en-dessous de celles-ci).

Lorsque ces composants ou accessoires (dans leur position déployée) se situent dans le gabarit de repliage de celle-ci, ils doivent être repliés avant ou en même temps que ladite section ou partie latérale.

Or, sur certaines machines, ces composants ou accessoires, du type plateforme et escalier d'accès par exemple, ne peuvent pas être montés directement sur ces sections ou parties latérales (et donc ne peuvent pas être repliés avec elles), notamment lorsqu'ils doivent être situés en hauteur, par exemple nettement au-dessus desdites parties ou sections, ou être accrochés sur une autre partie de la machine, tel que par exemple le côté d'une trémie.

Il est parfois possible que ces composants ou accessoires interfèrent (dans leur position déployée) avec le mouvement de repliage d'une partie ou section fonctionnelle.

Par conséquent, lorsque l'on replie une telle machine pour la faire passer en position "transport", ces éléments doivent également être repliés avant les sections ou parties latérales de la machine, faute de quoi ces dernières viendront heurter lesdits composants ou accessoires et les endommager.

Bien souvent, ce repliage est manuel et effectué par l'opérateur (composant monté en rotation que l'opérateur vient basculer à la main).

Dans le cas d'un tel repliage manuel, les oublis de l'opérateur sont fréquents, ce qui entraine l'endommagement de ces composants ou accessoires, écrasés lors du repliage des parties ou sections repliables, voire aussi l'endommagement des parties ou sections repliées, ou du dispositif d'actionnement qui les déplace.

Il existe déjà, dans l'état de la technique, des solutions destinées à résoudre ce problème. Ainsi, il a été proposé :
- que le composant soit directement monté sur la section ou partie latérale repliable : il est donc replié en même temps que celle-ci
- qu'un actionneur (vérin) vienne replier le composant avant le repliage de la section ou partie latérale
- qu'un tirant (télescopique ou rigide) relie le composant à la section latérale.

Cependant, elles ne sont pas forcément applicables à tous les cas de figures ou avantageuses.

En effet, le montage direct du composant sur la partie repliable n'est possible que dans certaines configurations (l'accès sur le dessus de la partie est adéquat) et peut entrainer des contraintes constructives et structurelles pour la partie concernée.

La mise en oeuvre d'un actionneur spécifique est onéreuse et complexifie la construction de la machine (système d'alimentation et de commande supplémentaire). En outre, la séquence de repliage du composant doit être intégrée dans la séquence de repliage de la partie concernée.

L'utilisation d'un tirant n'est possible que si les mouvements de repliage sont identiques (en cas de pivotement : les axes de repliage du composant et de la section doivent être parallèles).

Par ailleurs, la mise en oeuvre d'un tirant, d'un bras ou d'un vérin crée un obstacle matériel pouvant gêner l'accès latéral à la machine.

La présente invention a notamment pour but de proposer une solution simple et adaptable, permettant de déplacer un composant ou accessoire d'une machine agricole sans mettre en oeuvre un quelconque moyen actif spécifique et préférentiellement en évitant de manière certaine toute interférence (lors du repliage) entre ledit composant ou accessoire et une partie ou section repliable, tout en palliant au moins les principales limitations des solutions existantes indiquées ci-dessus.

A cet effet, elle a pour objet une machine agricole repliable, laquelle comprend, d'une part, au moins une partie ou section fonctionnelle montée de manière articulée et pouvant être déplacée alternativement entre au moins une première position déployée et au moins une seconde position repliée et, d'autre part, au moins un composant monté de manière articulée et pouvant être déplacé entre une première position déployée et/ou opérationnelle et une seconde position non opérationnelle et/ou repliée ou escamotée,
machine agricole caractérisée en ce que ledit ou chaque composant est relié cinématiquement, au moins en traction, par l'intermédiaire d'au moins un lien mécanique flexible non élastique, à la ou une partie ou section fonctionnelle considérée, de telle manière qu'un déplacement de ladite partie ou section fonctionnelle entre sa première position et sa seconde position entraine automatiquement un déplacement similaire dudit ou de chaque composant entre ses première et seconde positions.

L'invention sera mieux comprise grâce à la description ci-après, qui se rapporte à des modes de réalisation préférés, donnés à titre d'exemples non limitatifs et expliqués avec référence aux dessins schématiques annexés, dans lesquels :
[Fig. 1A] et
   [Fig. 1B] sont des vues en perspective d'une machine agricole selon un premier mode de réalisation de l'invention sous forme de semoir, avec des parties fonctionnelles latérales repliables (ici des portions de châssis portant des éléments semeurs individuels), respectivement dans une configuration dépliée et dans une configuration repliée ;
[Fig. 2A] et
   [Fig. 2B] sont des vues partielles en perspective et à une autre échelle de la machine des figures 1, montrant le déploiement/repliement d'un composant sous forme d'escalier pivotant ou basculant (pour accéder à une plateforme), conjointement avec le déploiement/repliement des parties fonctionnelles latérales de la machine, ainsi que le lien mécanique assurant ces changements de configurations simultanés (figure 1A : position déployée-figure 1B: position repliée) ;
[Fig. 3A] et
   [Fig. 3B] sont des vues partielles similaires à celles des figures 2, représentant le même objet dans les deux mêmes configurations, mais considéré selon une direction différente (vues en élévation frontale par rapport à l'escalier déployé) ;
[Fig. 4A] et
   [Fig. 4B] sont des vues de détail des objets des figures 2 et 3, dans les mêmes positions de l'escalier respectivement, considérés selon un autre angle ;
[Fig. 5A] et
   [Fig. 5B] sont des vues en perspective et en élévation latérale d'une machine agricole selon un second mode de réalisation de l'invention, sous forme de semoir avec des parties fonctionnelles latérales repliables et pourvu d'un escalier arrière basculant pour accéder à la trémie, dans une configuration dépliée/opérationnelle (NB : les deux éléments semeurs centraux n'ont pas été représentés pour ne pas surcharger les figures) ;
[Fig. 6A] et
   [Fig. 6B] sont des vues en perspective et en élévation latérale de la machine des figures 5 dans une configuration repliée, avec repliement simultané vers le haut des parties fonctionnelles latérales repliables et de l'escalier (configuration escamotée/ non opérationnelle).

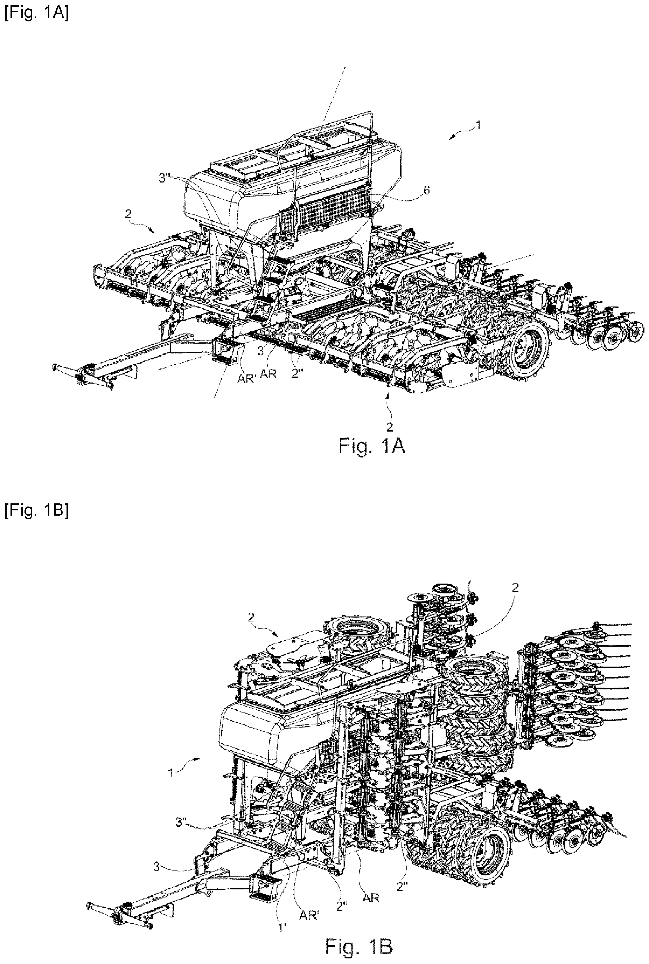

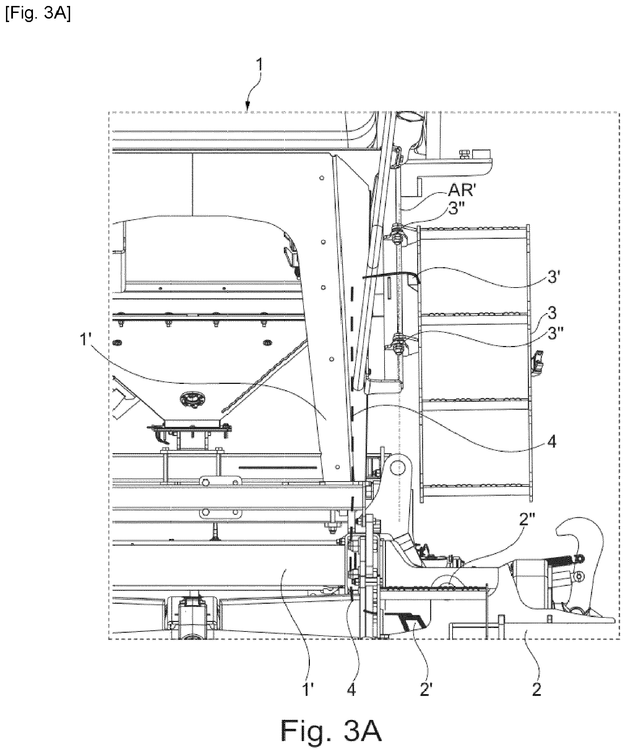

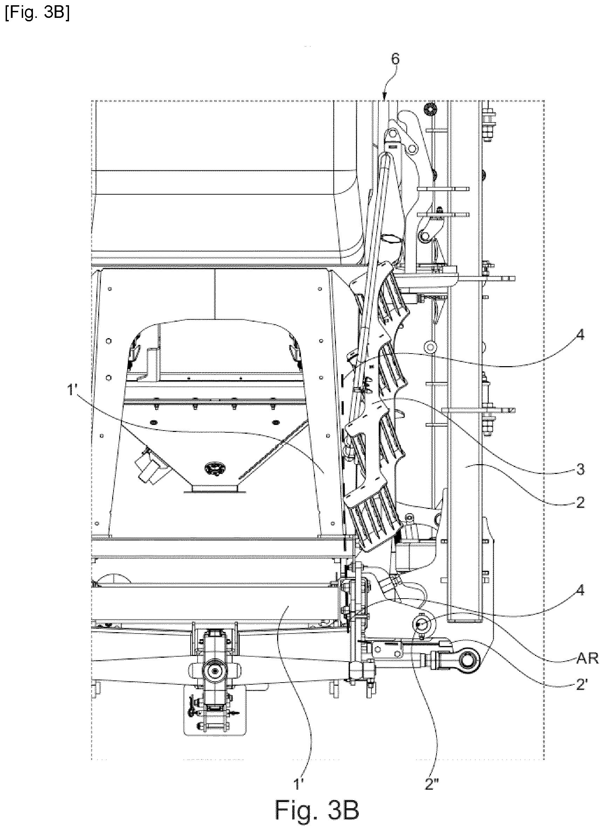

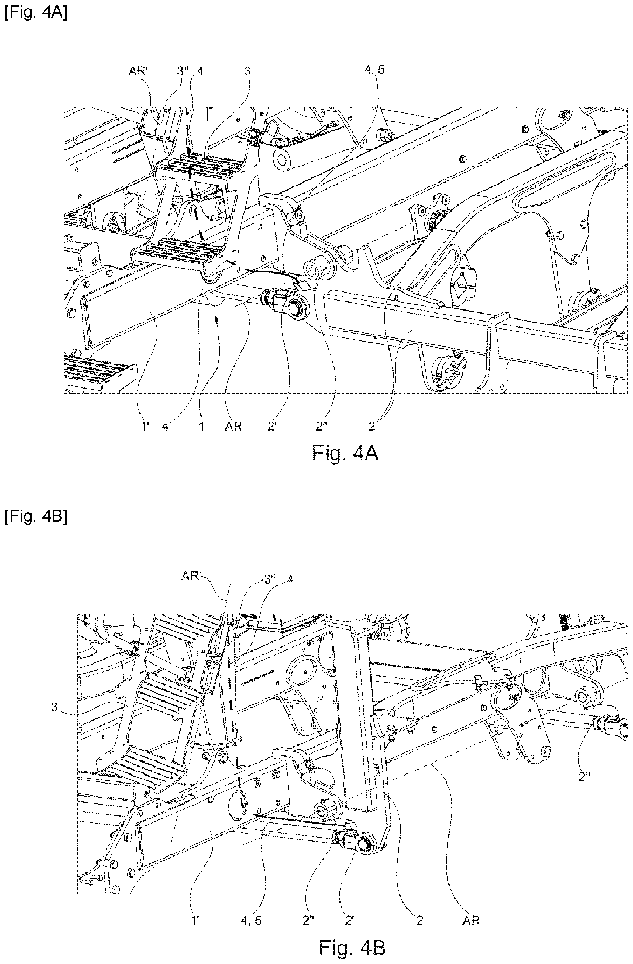

Les figures 1 à 6 illustrent, pour certaines seulement partiellement, une machine agricole (1) repliable, laquelle comprend, d'une part, au moins une partie ou section fonctionnelle (2) montée de manière articulée et pouvant être déplacée alternativement entre au moins une première position déployée et au moins une seconde position repliée et, d'autre part, au moins un composant (3) monté de manière articulée et pouvant être déplacé entre une première position déployée et/ou opérationnelle et une seconde position non opérationnelle et/ou repliée ou escamotée.

Conformément à l'invention, ledit ou chaque composant (3) est relié cinématiquement, au moins en traction, par l'intermédiaire d'au moins un lien mécanique (4) flexible non élastique, à la ou une partie ou section fonctionnelle (2) considérée, de telle manière qu'un déplacement de ladite partie ou section fonctionnelle (2) entre sa première position et sa seconde position entraine automatiquement un déplacement similaire dudit ou de chaque composant (3) entre ses première et seconde positions.

Grâce à l'invention, il est par conséquent possible de déplacer un composant ou accessoire (3) sans mettre en oeuvre un quelconque moyen actif spécifique, en établissant un lien de dépendance cinématique entre ce composant et une partie ou portion fonctionnelle (2) mobile, sous l'action d'un tel moyen actif (par exemple un actionneur). En outre, un tel lien (4) présente un encombrement minimal et peut être installé avec un encombrement latéral minimal par rapport à la machine. De plus, le lien (4) peut être au moins partiellement intégré à la structure même de la machine (1) et s'étendre le long et/ou entre des éléments constitutifs de celle-ci.

Par « partie ou section fonctionnelle (2) » de la machine (1), on entend une partie de la machine qui porte, intègre ou constitue au moins un outil ou instrument de travail de cette machine. Une telle partie est typiquement déplaçable entre une position de travail, généralement associée à un état déployé et une position de transport (ou de non-utilisation), généralement associée à un état replié. Le lien (4) permet d'asservir de manière fiable la position ou l'état dudit composant (3) à la position ou à l'état de ladite partie fonctionnelle (2) à laquelle il est relié. Le lien (4) peut être unique ou multiple (c'est-à-dire être formé d'un seul élément ou de plusieurs éléments, notamment au moins deux éléments) en fonction de la masse à déplacer notamment et/ou de la taille du composant.

La mise en oeuvre de la solution précitée selon l'invention est particulièrement bénéfique, dans le cas où ledit au moins un composant (3) est arrangé dans ou sur la machine (1) avec un positionnement tel qu'il interfère avec le déplacement de la partie ou section fonctionnelle (2) -de sa première à sa seconde position-lorsque ledit composant (3) se trouve en-dehors de sa seconde position.

En proposant de relier par un lien mécanique flexible et non élastique le composant (3) à la partie fonctionnelle repliable, l'invention fournit une solution simple, fiable et adaptable, évitant de manière certaine toute interférence (lors du repliage de cette partie) entre ledit composant et ladite partie repliable et permettant de s'affranchir de tout oubli ou erreur. Bien entendu, dans ce cas, le lien (4) sera configuré de telle manière qu'au moins le volume d'interférence potentielle, occupé à la fois par le composant à l'état déployé et par la partie repliable à l'état replié, soit dégagé (ou se dégage progressivement au moins) par le composant lorsque la partie repliable s'y engage (et éventuellement vice-versa). On peut noter que la solution inventive ne nécessite, ni ne dépend d'aucun actionneur et n'a besoin d'aucune source d'énergie (électrique, pneumatique ou hydraulique) et constitue un élément de sécurité dans l'utilisation de la machine (1) en automatisant une opération de sécurisation qui pourrait être oubliée par l'opérateur et provoquer un endommagement de la machine.

Avantageusement, cette dernière comprend au moins un moyen (5) de guidage en coulissement, le cas échant avec changement de direction, pour le ou chaque lien mécanique (4). On aboutit ainsi à une grande flexibilité de mise en oeuvre et à une grande adaptabilité de la solution inventive.

Préférentiellement, le ou chaque lien mécanique (4) consiste en un élément allongé flexible sensiblement non élastique, au moins selon sa direction longitudinale, tel qu'une chaîne, un ruban ou un câble, avantageusement à brins métalliques.

Selon une autre caractéristique de l'invention, il est en outre prévu que ladite machine (1) comporte au moins un moyen (5) de guidage de ce lien mécanique (4), notamment en coulissement, avec ou sans changement de direction, sous la forme d'un rail, d'un renvoi d'angle, d'un tube, d'un anneau, d'une poulie, d'un pignon ou analogue, ce ou chaque moyen (5) de guidage étant situé sur le trajet du ou de chaque lien mécanique (4) et bien entendu adapté à la nature dudit lien (4). Sur les figures annexées, seuls des moyens (5) de guidage sous forme de portions de tube sont représentés, mais l'homme du métier comprendra qu'au niveau des changements de direction du lien mécanique flexible (4) des renvois (poulie, rail, pignons, etc....) sont typiquement présents pour guider son déplacement.

Un moyen (5) de guidage sous forme de tube (rigide ou semi-rigide au moins) peut s'étendre autour et sur une ou des portions ou sur la totalité de la longueur d'un lien mécanique (4) sous forme de câble, formant ainsi un câble de type Bowden. Sur les figures annexées, la présence de tels moyens de guidage peut être aisément repérée par l'homme du métier, même s'ils ne sont pas spécifiquement représentés (cf. notamment au niveau des endroits de changement de direction/d'orientation du lien mécanique).

Bien que les figures annexées ne représentent qu'un unique câble formant le lien (4), ce dernier peut comprendre au moins deux câbles (ou encore au moins un câble et au moins une chaîne) présentant un même point de fixation ((2') et/ou (3')) ou préférentiellement des points de fixation ((2') et/ou (3')) distincts permettant de répartir les contraintes au niveau du composant et/ou de la partie concernés. Compte tenu de la nature du ou de chaque lien (4), le raccordement de ce dernier avec la partie fonctionnelle (2) peut être réalisé indifféremment à un endroit quelconque de cette dernière, ce qui entraine une dépendance moindre par rapport à la cinématique et à la configuration de cette partie.

En accord avec une caractéristique avantageuse de l'invention ressortant des figures annexées, le mouvement de déplacement de la partie ou section fonctionnelle (2) considérée entre sa première position et sa seconde position consiste en un pivotement autour d'un axe de repliage (AR), ce dernier reliant ladite partie ou section fonctionnelle (2) à une partie de châssis (1') ou à une structure porteuse analogue de la machine (1).

En accord avec une autre caractéristique avantageuse de l'invention ressortant aussi des figures annexées, le mouvement de déplacement du ou d'un composant (3) considéré entre sa première position et sa seconde position sous l'action du lien mécanique (4) comprend, notamment ou exclusivement, un pivotement autour d'un axe (AR'), lequel relie avantageusement ledit composant (3) au châssis (1') ou à une structure porteuse analogue de la machine (1).

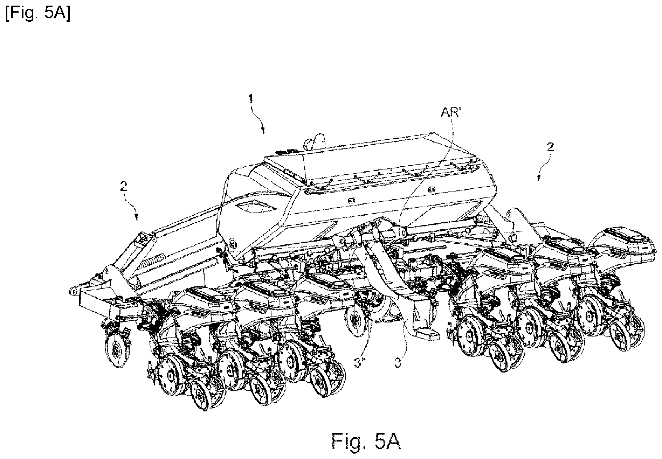

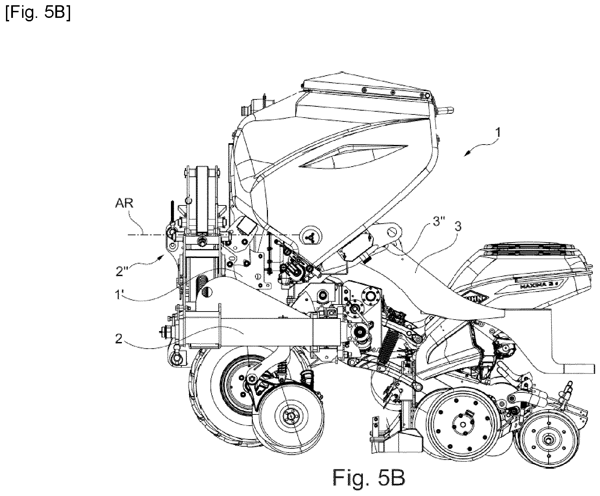

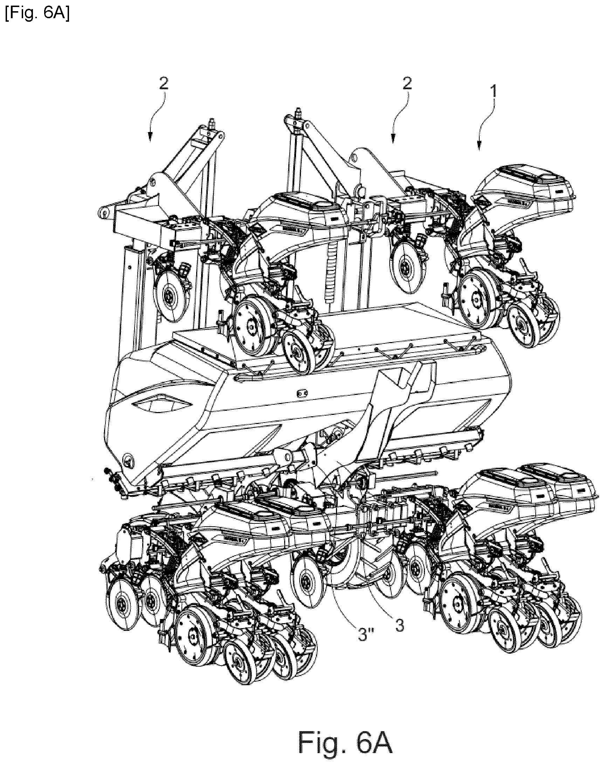

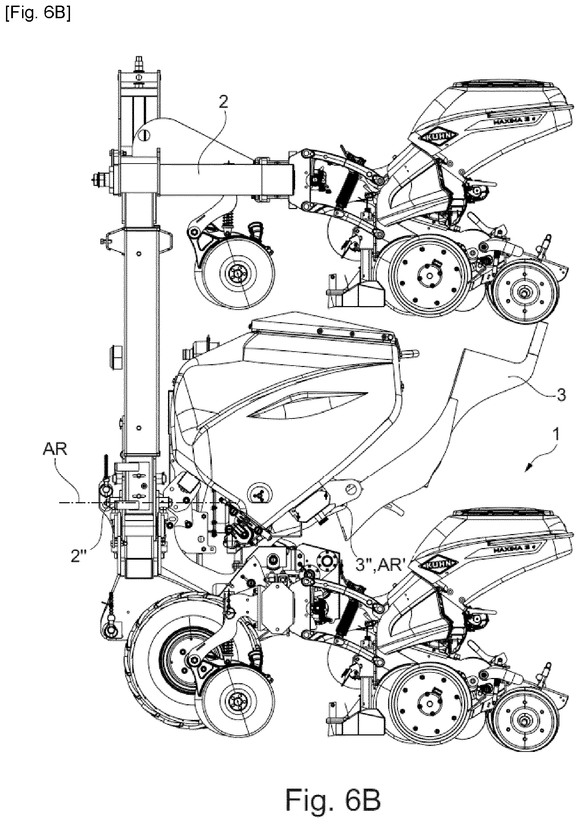

Cet axe (AR') peut être parallèle, perpendiculaire (figures 5 et 6) ou incliné (figures 1 à 4) par rapport à un axe ou l'axe de repliage (AR) reliant ladite partie ou section fonctionnelle (2) au châssis (1') ou à une structure porteuse analogue de la machine (1).

Selon une caractéristique supplémentaire de l'invention, non représentée, le mouvement de déplacement du ou d'un composant (3) considéré entre sa première position et sa seconde position sous l'action du lien mécanique (4) comprend en outre un coulissement et/ou un pivotement autour d'un autre axe, les mouvements de déplacement respectivement d'une partie ou section fonctionnelle (2) et d'un composant (3) relié à cette dernière par un lien mécanique (4) étant d'amplitude angulaire identique ou différente et/ou synchrone ou différé temporellement.

Il peut être prévu, dans un souci de maintenance facilitée, que le lien mécanique (4) soit fixé de manière amovible au composant (3) et/ou à la partie ou section fonctionnelle (2) considéré(e)(s), le cas échéant interchangeable sans outil (fixation par emboitement ou accrochage). Alternativement ou additionnellement, sa longueur peut être ajustable. Un dispositif de maintien constant sous tension du lien (4) peut aussi être prévu, pour garantir un synchronisme de déplacement sans plage morte, par exemple monté à l'un des points de fixation dudit lien (4). Un tel dispositif de mise sous tension peut par exemple consister simplement en un ressort présentant une résistance à la déformation compatible avec la charge à déplacer.

Comme le montrent à titre d'exemple illustratif les figures 1, ledit au moins un composant (3) considéré est monté articulé sur une partie de châssis (1') ou une structure porteuse analogue de la machine (1), contre laquelle vient se replier la partie ou section fonctionnelle (2) dans sa seconde position, ledit composant (3) étant également replié contre ladite partie de châssis (1') ou structure porteuse analogue dans sa seconde position, en étant situé entre cette partie de châssis (1') ou structure porteuse analogue et ladite partie ou section fonctionnelle (2).

Conformément à une autre variante de réalisation non illustrée sur les figures, ledit au moins un composant (3) considéré est monté articulé sur une partie de châssis (1') ou une structure porteuse analogue de la machine (1), contre laquelle vient se replier la partie ou section fonctionnelle (2) dans sa seconde position, ledit composant (3) étant déplacé en-dehors de la trajectoire de mouvement de ladite partie de châssis (1') ou structure porteuse analogue vers une seconde position escamotée située en-dehors de l'espace entre cette partie de châssis (1') ou structure porteuse analogue et ladite partie ou section fonctionnelle (2) dans sa seconde position.

En vue de rajouter une fonctionnalité supplémentaire au lien (4), autorisant une opérabilité bidirectionnelle de la liaison cinétique entre composant et partie fonctionnelle, le lien mécanique (4) peut présenter des propriétés de rigidité axiale, permettant la transmission d'une force de poussée sollicitant le déplacement du composant (3) de sa seconde position vers sa première position lorsque la partie ou section fonctionnelle (2) se déplace de sa seconde position vers sa première position. Lorsque le retour en première position du composant (3) s'effectue avec l'appui de la pesanteur (position repliée vers le haut), une faible poussée initiale du lien mécanique (4) est suffisante pour que ce retour se réalise automatiquement.

Comme le montrent à titre d'exemples les figures 1, 5 et 6, ledit au moins un composant (3) consiste en un moyen de support, d'accès et/ou de circulation pour un opérateur, tel qu'une échelle, une passerelle, une plateforme ou analogue et est avantageusement monté de manière articulée sur une partie de châssis (1') du type trémie ou un réservoir analogue, ou sur une structure support de ce dernier.

Ainsi, avec un lien mécanique (4) selon l'invention, un tel composant (3) qui n'est utile que durant les phases de travail et de maintenance et dont l'encombrement doit être réduit au maximum lors des phases de transport et de stockage, est automatiquement escamoté et replié par entrainement en dépendance du mouvement de repliement de la partie latérale (2) à laquelle il est relié directement par ce lien. Ce mouvement d'escamotage, illustré dans la présente comme étant un mouvement de repliement vers le haut par pivotement, peut en variante être un mouvement combiné (rotation autour de plusieurs axes, rotation + translation), un mouvement de coulissement ou autre. En particulier, un lien mécanique (4) sous forme de câble souple permet une grande variété de transformation et de transmission de mouvement.

L'intérêt de l'invention est bien entendu crucial lorsque la constitution de la machine (1) est telle que le composant (3) risque d'être écrasé par la partie fonctionnelle (2) qui se replie, notamment du fait d'un oubli de la part de l'opérateur.

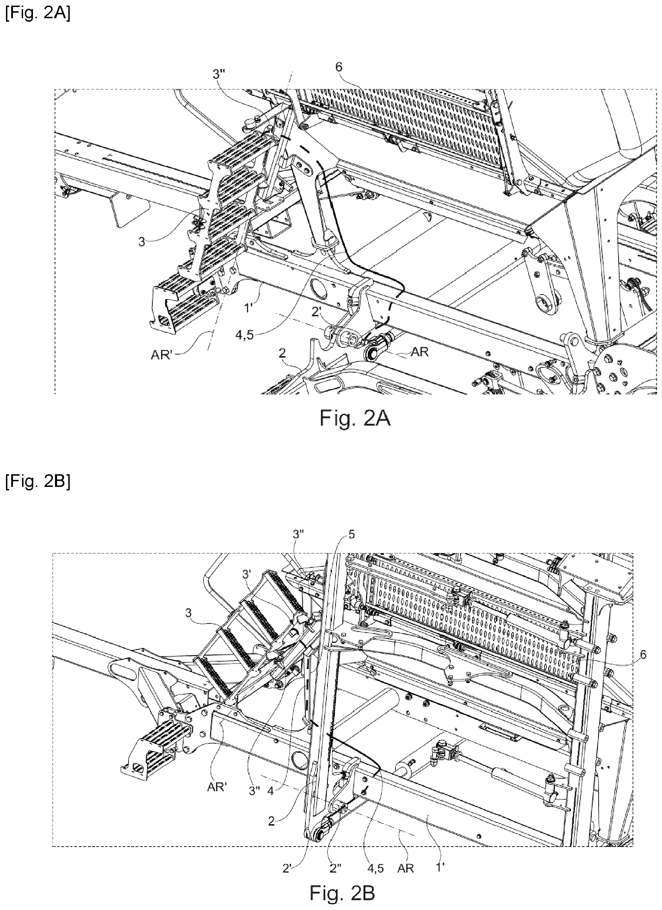

On peut relever sur les figures 1 et 2 que la machine (1) peut comporter un autre composant (6) du type moyen de support, complémentaire du composant sous forme d'escalier. Cet autre composant (6) peut éventuellement, en fonction de sa localisation notamment, également être monté de manière articulée et subir un déplacement entre une position déployée et une position repliée en fonction de la configuration de la machine (1). Ce déplacement peut être réalisé de manière autonome par rapport au déplacement d'une partie fonctionnelle (2) repliable, ou être commandé préalablement ou simultanément avec celui-ci (au moyen d'un actionneur par exemple, dédié ou non). Toutefois, cet autre composant (6) peut lui aussi, à l'instar du composant articulé (3) précité, être relié cinématiquement par un lien mécanique à la partie fonctionnelle repliable (2) concernée et être déplacé conjointement avec elle (non représenté).

En relation avec une construction pratique simple et avantageuse, la partie ou section fonctionnelle (2) dans sa seconde position constitue une butée de maintien du composant (3) dans sa seconde position, en particulier lorsque cette dernière constitue une position relevée instable.

Bien entendu, l'invention n'est pas limitée aux modes de réalisation décrits et représentés sur les dessins annexés. Des modifications restent possibles, notamment du point de vue de la constitution des divers éléments ou par substitution d'équivalents techniques, sans sortir pour autant du domaine de protection de l'invention.

## Revendications

1. Machine agricole (1) repliable, laquelle comprend, d'une part, au moins une partie ou section fonctionnelle (2) montée de manière articulée et pouvant être déplacée alternativement entre au moins une première position déployée et au moins une seconde position repliée et, d'autre part, au moins un composant (3) monté de manière articulée et pouvant être déplacé entre une première position déployée et/ou opérationnelle et une seconde position non opérationnelle et/ou repliée ou escamotée,
machine agricole (1) **caractérisée en ce que** ledit ou chaque composant (3) est relié cinématiquement, au moins en traction, par l'intermédiaire d'au moins un lien mécanique (4) flexible, à la ou une partie ou section fonctionnelle (2) considérée, de telle manière qu'un déplacement de ladite partie ou section fonctionnelle (2) entre sa première position et sa seconde position entraine automatiquement un déplacement similaire dudit ou de chaque composant (3) entre ses première et seconde positions.

2. Machine agricole (1) selon la revendication 1, **caractérisée en ce que** ledit au moins un composant (3) est arrangé dans ou sur la machine (1) avec un positionnement tel qu'il interfère avec le déplacement de la partie ou section fonctionnelle (2) lorsque ledit composant (3) se trouve en-dehors de sa seconde position, le lien mécanique (4) étant unique ou multiple.

3. Machine agricole (1) selon la revendication 1 ou 2, **caractérisée en ce qu'**elle comprend au moins un moyen (5) de guidage en coulissement, le cas échant avec changement de direction, pour le ou chaque lien mécanique (4).

4. Machine agricole (1) selon l'une quelconque des revendications 1 à 3, **caractérisée en ce que** le ou chaque lien mécanique (4) consiste en un élément allongé flexible sensiblement non élastique, au moins selon sa direction longitudinale, tel qu'une chaîne, un ruban ou un câble, avantageusement à brins métalliques, et **en ce que** ladite machine (1) comporte au moins un moyen (5) de guidage de ce lien (4), notamment en coulissement, avec ou sans changement de direction, sous la forme d'un rail, d'un renvoi d'angle, d'un tube, d'un anneau, d'une poulie, d'un pignon ou analogue, ce ou chaque moyen (5) de guidage étant situé sur le trajet du ou de chaque lien mécanique (4) entre son point de fixation (2') sur la partie ou section fonctionnelle (2) considérée et son point de fixation (3') au composant (3) relié à cette partie.

5. Machine agricole (1) selon l'une quelconque des revendications 1 à 4, **caractérisée en ce que** le mouvement de déplacement de la partie ou section fonctionnelle (2) considérée entre sa première position et sa seconde position consiste en un pivotement autour d'un axe de repliage (AR), ce dernier reliant ladite partie ou section fonctionnelle (2) à une partie de châssis (1') ou à une structure porteuse analogue de la machine (1).

6. Machine agricole (1) selon l'une quelconque des revendications 1 à 5, **caractérisée en ce que** le mouvement de déplacement du ou d'un composant (3) considéré entre sa première position et sa seconde position sous l'action du lien mécanique (4) comprend, notamment ou exclusivement, un pivotement autour d'un axe (AR'), lequel relie avantageusement ledit composant (3) au châssis (1') ou à une structure porteuse analogue de la machine (1), cet axe (AR') étant parallèle, perpendiculaire ou incliné par rapport à un axe ou l'axe de repliage (AR) reliant ladite partie ou section fonctionnelle (2) au châssis (1') ou à une structure porteuse analogue de la machine (1).

7. Machine agricole (1) selon la revendication 6, **caractérisée en ce que** le mouvement de déplacement du ou d'un composant (3) considéré entre sa première position et sa seconde position sous l'action du lien mécanique (4) comprend en outre un coulissement et/ou un pivotement autour d'un autre axe, les mouvements de déplacement respectivement d'une partie ou section fonctionnelle (2) et d'un composant (3) relié à cette dernière par un lien mécanique (4) étant d'amplitude angulaire identique ou différente et/ou synchrone ou différé temporellement.

8. Machine agricole (1) selon l'une quelconque des revendications 1 à 7, **caractérisée en ce que** le lien mécanique (4) présente des propriétés de rigidité axiale, permettant la transmission d'une force de poussée sollicitant le déplacement du composant (3) de sa seconde position vers sa première position lorsque la partie ou section fonctionnelle (2) se déplace de sa seconde position vers sa première position.

9. Machine agricole (1) selon l'une quelconque des revendications 1 à 8, **caractérisée en ce que** ledit au moins un composant (3) consiste en un moyen de support, d'accès et/ou de circulation pour un opérateur, tel qu'une échelle, une passerelle, une plateforme ou analogue, et est avantageusement monté de manière articulée sur une partie de châssis (1') du type trémie ou un réservoir analogue.

10. Machine agricole (1) selon l'une quelconque des revendications 1 à 9, **caractérisée en ce que** la partie ou section fonctionnelle (2) dans sa seconde position constitue une butée de maintien du composant (3) dans sa seconde position.
